# EUROPEAN PATENT APPLICATION

(11) **EP 4 679 555 A2**
(43) Date of publication of application: **14.01.2026**
(21) Application number: 25179213.1
(22) Date of filing: 27.05.2025
(51) Int. Cl.: H01M 10/0587, H01M 50/627, H01M 50/538, H01M 10/052, H01M 50/186

(54) **SECONDARY BATTERY**

(30) Priority: 18.06.2024 KR 20240078719
(71) Applicant: SAMSUNG SDI CO., LTD., Yongin-si, Gyeonggi-do 17084 (KR)
(72) Inventor: KIM, Dae Kyu, 17084 Yongin-si (KR)
(74) Representative: Marks & Clerk LLP

(57) **Abstract**

A secondary battery includes a case including an accommodation part and having a width direction (X-axis direction) and a height direction (Y-axis direction) defined, an electrode assembly accommodated in the accommodation part, a first current collecting plate on the electrode assembly, an injection member on the first current collecting plate, and a cap assembly on the case, wherein the electrode assembly includes a first electrode, a second electrode, and a separator therebetween, the electrode assembly includes a hollow part, the first current collecting plate includes a first hole overlapping the hollow part, the injection member includes an inlet and an outlet, the injection member includes a second hole overlapping the first hole, the injection member includes a protrusion part in the first hole, the protrusion part spaced apart from the first current collecting plate, and a width of the protrusion part changes while extending from the inlet to the outlet.

## Description

### BACKGROUND

### 1. Field

Embodiments relate to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The information disclosed in this section is provided only for enhancement of understanding of the background of the disclosure and therefore it may contain information that does not form the prior art.

### SUMMARY

Embodiments include a secondary battery, including a case including an accommodation part and having a width direction and a height direction, an electrode assembly accommodated in the accommodation part, a first current collecting plate on the electrode assembly, an injection member on the first current collecting plate, and a cap assembly on the case, wherein the electrode assembly includes a first electrode, a second electrode and a separator between the first electrode and the second electrode, wherein the electrode assembly includes a hollow part, the first current collecting plate includes a first hole overlapping the hollow part, the injection member includes an inlet and an outlet, the injection member includes a second hole overlapping the first hole, the injection member includes a protrusion part inserted into the first hole, the protrusion part is spaced apart from the first current collecting plate, and a width of the protrusion part changes while extending from the inlet to the outlet.

The injection member may further include a support part on the first current collecting plate, wherein the protrusion part may include a first end connected to the support part and a second end opposite to the first end, the support part and the electrode assembly may be spaced apart by a first distance, and a distance in the height direction between the first end and the second end may be less than or equal to the first distance.

The first electrode may include a first uncoated portion, wherein the second electrode may include a second uncoated portion, the protrusion part overlaps the first uncoated portion in the width direction, and the protrusion part does not overlap the second electrodes and the separator in the width direction.

A width of the inlet and the width of the outlet may be smaller than a width of the first hole, and the width of the outlet may be 15% to 50% of the width of the inlet.

A width of the inlet and the width of the outlet may be smaller than a width of the first hole, and the width of the inlet may be 15% to 50% of the width of the outlet.

The protrusion part may include a first protrusion part and a second protrusion part, wherein a width of the first protrusion part may decrease while extending from the inlet to the outlet, and a width of the second protrusion part may increase while extending from the inlet to the outlet.

The protrusion part may include a first protrusion part and a second protrusion part, wherein a width of the first protrusion part may change while extending from the inlet to the outlet, and a width of the second protrusion part may not change while extending from the inlet to the outlet.

The secondary battery may further include a fixing member between the first current collecting plate and the protrusion part.

The injection member may include at least one groove.

Embodiments include a secondary battery including a case having an accommodation part and having a width direction and a height direction defined, an electrode assembly accommodated in the accommodation part, a first current collecting plate on the electrode assembly, an injection member on the first current collecting plate, and a cap assembly on the case, wherein the electrode assembly includes a first electrode, a second electrode; and a separator between the first electrode and the second electrode, the electrode assembly includes a hollow part, the first current collecting plate includes a first hole overlapping the hollow part, the injection member includes a second hole overlapping the first hole, the injection member includes a support part on the first current collecting plate, a protrusion part inserted into the interior of the first hole, and a plurality of buffer parts extending in the width direction from the protrusion part, and the protrusion part contacts the first current collecting plate.

Each of the plurality of buffer parts may include a first end connected to the protrusion part and a second end opposite to the first end, wherein each second end of the plurality of buffer parts do not overlap a center of the second hole of the injection member in the height direction.

The plurality of buffer parts may overlap in the height direction.

Embodiments include a secondary battery including a case having an accommodation part and having a width direction and a height direction defined, an electrode assembly accommodated in the accommodation part, a first current collecting plate on the electrode assembly, an injection member on the first current collecting plate and a cap assembly on the case, wherein the electrode assembly includes a first electrode, a second electrode, and a separator between the first electrode and the second electrode, wherein the electrode assembly includes a hollow part, the first current collecting plate includes a first-first hole overlapping the hollow part, and a first-second hole that does not overlap the hollow part, the injection member includes an inlet and an outlet, the injection member includes a second hole overlapping the first-first hole, the injection member includes a support part on the first current collecting plate and a protrusion part inserted into the first-first hole, the protrusion part is spaced apart from the first current collecting plate, and a width of the protrusion part changes while extending from the inlet to the outlet.

An inner surface of the first-second hole may be inclined.

The injection member may further include a sealing member between an inner surface of the first-first hole and the protrusion part.

The secondary battery may further include a bonding member between the support part and the first current collecting plate.

The first current collecting plate may include a first surface facing the electrode assembly and a second surface opposite the first surface, and the bonding member may be on the second surface and an inner surface of the first-first hole.

The first current collecting plate may include a first surface facing the electrode assembly and a second surface opposite the first surface, wherein the first-first hole may include a first groove penetrating the first surface and a second groove penetrating the second surface, a width of the second groove may be greater than a width of the first groove, and the support part may be on a support surface of the second groove.

At least some of the above and other features of the invention are set out in the claims.

### BRIEF DESCRIPTION OF THE DRAWINGS

The accompanying drawings, which are incorporated in this specification, illustrate preferred embodiments and serve to further illustrate the technical ideas of the disclosure in conjunction with the detailed description of embodiments that follows, and the disclosure is not to be construed as limited to what is shown in such drawings. In the drawings:
FIG. 1 is a perspective view showing a secondary battery according to one or more embodiments;
FIG. 2 is an exploded perspective view of the secondary battery of FIG. 1;
FIG. 3 is a sectional view taken along the A-A' section of FIG. 1;
FIG. 4 is an enlarged view of the A section of Fig. 3;
FIGS. 5 to 15 are various alternative enlarged views of the A section of FIG. 3 showing different embodiments;
FIG. 16 is a top view of a first current collecting plate according to one or more embodiments;
FIG. 17 is a sectional view taken along the B-B' section of FIG. 16;
FIG. 18 is a top view illustrating the combination of the first current collecting plate and the injection member according to one or more embodiments;
FIG. 19 is an exploded sectional view taken along the C-C' section of FIG. 18;
FIGS. 20 to 24 are further sectional views taken along the C-C' section of FIG. 18 showing further embodiments;
FIG. 25 is another top view illustrating the combination of the first current collecting plate and the injection member according to one or more embodiments;
FIG. 26 is a sectional view taken along the D-D' section of FIG. 25;
FIG. 27 is another top view illustrating the combination of the first current collecting plate and the injection member according to one or more embodiments;
FIG. 28 is a sectional view taken along the E-E' section of FIG. 26;
FIG. 29 is a perspective view showing a battery module including battery cells according to one or more embodiments;
FIGS. 30 and 31 are perspective views showing a battery pack including battery modules according to one or more embodiments; and
FIGS. 32 and 33 are a perspective view and a side view, respectively, showing a vehicle including battery packs according to one or more embodiments.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

**In** the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the following description, the width direction of the case means the X-axis direction. Also, the height direction of the case means the Y-axis direction.

Hereinafter, secondary batteries according to one or more embodiments will be described with reference to the drawings.

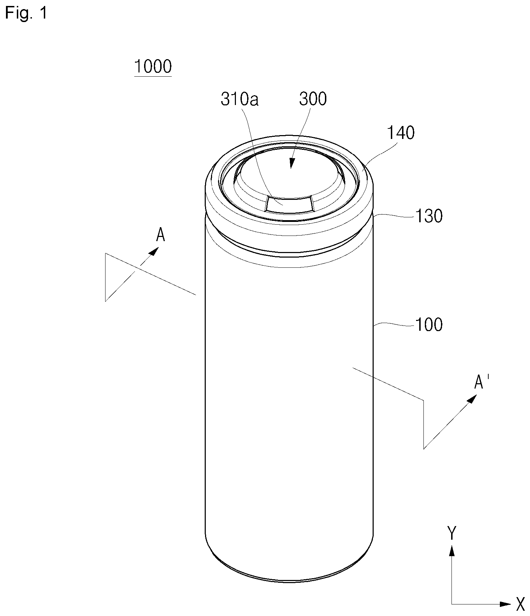

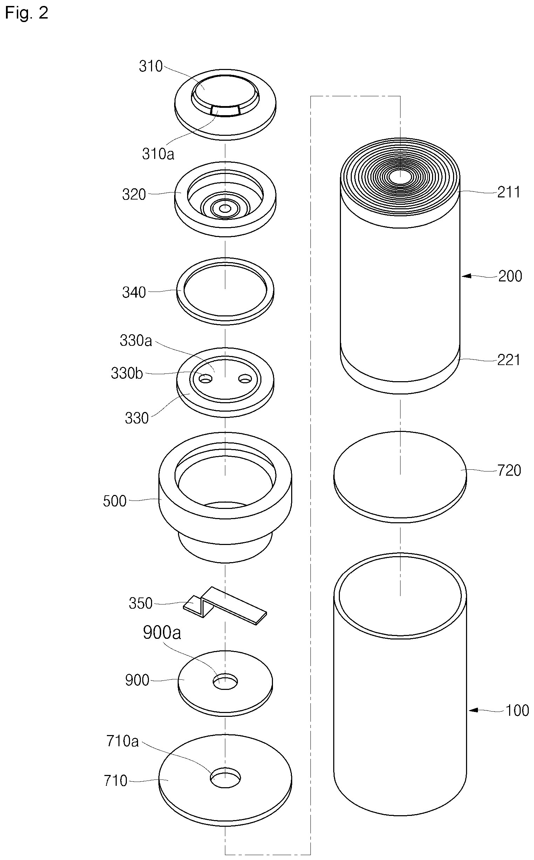

Referring to FIGS. 1 to 4, the secondary battery 1000 may include a case 100, an electrode assembly 200, a lead tab 350, a cap assembly 300, an insulating gasket 500, current collecting plates 710 and 720, and an injection member 900.

The case 100 forms the overall appearance of the secondary battery 1000. The case 100 may include a conductive metal such as aluminum, an aluminum alloy, or nickel-plated steel. Also, the case 100 may provide a space in which the electrode assembly 200 is accommodated. For example, the case 100 may include an accommodation part, and the electrode assembly 200 may be accommodated inside the accommodation part.

The case 100 may take various shapes. For example, the case 100 may have a circular shape, a prismatic shape, or a pouch shape. However, the embodiment is not limited thereto. Hereinafter, for convenience of explanation, the case 100 is described as having a circular (cylindrical) shape.

The electrode assembly 200 may include a first electrode 210, a second electrode 220, and a separator 230. The separator 230 may be between the first electrode 210 and the second electrode 220. The electrode assembly 200 may be wound in a jelly-roll shape.

The first electrode 210 includes a first substrate and a first active material layer on the first substrate. The first substrate includes one surface and the other surface opposite to the one surface. The first active material layer may be on at least one of one surface and the other surface of the first substrate. The first substrate may include a first uncoated portion 211. The first active material layer is not on the first uncoated portion 211. That is, the first uncoated portion 211 may be a region where the first active material layer is not applied.

The second electrode 220 includes a second substrate and a second active material layer on the second substrate. The second substrate has one surface and the other surface opposite to the one surface. The second active material layer may be on at least one of the one surface and the other surface of the second substrate. The second substrate may include a second uncoated portion 221. The second active material layer is not on the second uncoated portion 221. That is, the second uncoated portion 221 may be a region where the second active material layer is not applied.

The first electrode 210 may act as a positive electrode. **In** such an embodiment, the first substrate may be made of, for example, an aluminum foil, and the first active material layer may include, for example, a transition metal oxide. The second electrode may act as a negative electrode. **In** such an embodiment, the second substrate may be made of, for example, a copper foil or a nickel foil, and the second active material layer may include graphite, for example.

The separator 230 prevents a short circuit between the first electrode 210 and the second electrode 220 while allowing movement of lithium ions therebetween. The separator 230 may be made of, for example, a polyethylene film, a polypropylene film, a polyethylene-polypropylene film, or the like.

The case 100 accommodates the electrode assembly 200 and electrolyte and, together with the cap assembly 300, forms the external appearance of the secondary battery. The case 100 may have a substantially cylindrical body portion 110 and a bottom portion 120 connected to one side (e.g., to one end) of the body portion 110. A beading part 130 (e.g., a bead) deformed inwardly may be formed in the body portion 110, and a crimping part 140 (e.g., a crimp) bent inwardly may be formed at an open end of the body portion 110.

The beading part 130 can reduce or prevent movement of the electrode assembly 200 inside the case 100 and can facilitate seating of the insulating gasket 500 and the cap assembly 300. The crimping part 140 may firmly fix the cap assembly 300 by pressing the edge of the case against the insulating gasket 500. The case 100 may be formed of iron plated with nickel, for example.

The cap assembly 300 may be fixed to the inside of the crimping part 140 by the insulating gasket 500 to seal the case 100. The cap assembly 300 may include a cap up 310, a safety vent 320, a cap down 330, and an insulating member 340, but is not limited thereto and may be modified in various ways.

The cap up 310 may be positioned at the uppermost part of the cap assembly 300. The cap up 310 may include a terminal part that protrudes upwardly and is connected to an external circuit, and an outlet 310a for discharging gas may be arranged around the terminal part.

The safety vent 320 may be located under the cap up 310. The safety vent 320 may include a protrusion part that protrudes convexly downwardly and is connected to the cap down 330, and at least one notch may be formed in the protrusion part around the protrusion part.

When gas is generated due to overcharging or abnormal operation of the secondary battery, the protrusion part is deformed upwardly by the pressure and separates from the cap down 330 while the safety vent 320 is cut (e.g., bursts or tears) along the notch. The cut safety vent 320 may prevent the secondary battery from exploding by allowing for the gas to be discharged to the outside.

The cap down 330 may be below the safety vent 320. The cap down 330 may have a first opening 330a for exposing the protrusion part of the safety vent 320 and a second opening 330b for gas discharge. The insulating member 340 may be positioned between the safety vent 320 and the cap down 330 to insulate the safety vent 320 and the cap down 330.

The first electrode 210 and the second electrode 220 generate lithium ions by an electrochemical reaction. The electrolyte serves to enable lithium ions to move. The electrolyte may be a non-aqueous organic electrolyte that is a mixture of a lithium salt and a high-purity organic solvent. Alternatively, the electrolyte may be a polymer using a polymer electrolyte or a solid electrolyte.

The electrode assembly 200 may include a hollow part 250. In embodiment(s), the electrode assembly 200 may be wound in one direction. Accordingly, the hollow part 250 may be at the center of the electrode assembly 200. If the electrolyte is injected, the electrolyte may be easily injected into the hollow part 250. Also, if gas or heat is generated inside the secondary battery, the gas or heat may easily move to the outside of the secondary battery through the hollow part 250. The separator 230 may be on the inner surface of the hollow part 250.

The current collecting plates may be on the upper and lower portions of the electrode assembly 200. The current collecting plates may include a first current collecting plate 710 and a second current collecting plate 720. The first current collecting plate 710 may be on the upper portion of the electrode assembly 200. In one or more embodiments, the first current collecting plate 710 may be between the electrode assembly 200 and the cap assembly 300. The second current collecting plate 720 may be on the lower portion of the electrode assembly 200. In one or more embodiments, the second current collecting plate 720 may be between the electrode assembly 200 and the bottom portion 120 of the case.

The area of the first current collecting plate 710 may be less than or equal to the area of the upper surface of the electrode assembly 200. Also, the area of the second current collecting plate 720 may be less than or equal to the area of the lower surface of the electrode assembly 200.

The first current collecting plate 710 may be connected to the first electrode 210. For example, the first current collecting plate 710 may be electrically connected to the first uncoated portion 211. For example, the first current collecting plate 710 and the first uncoated portion 211 may be coupled by welding.

The first current collecting plate 710 may be connected to the cap assembly 300. For example, the lead tab 350 may be between the first current collecting plate 710 and the cap assembly 300. One end of the lead tab 350 and the first current collecting plate 710 may be coupled by welding, for example. The other end of the lead tab 350 and the cap down 330 may be coupled by welding, for example. Accordingly, the first current collecting plate 710 and the cap assembly 300 may be electrically connected by the lead tab 350. Therefore, the first current collecting plate 710 may become a passage for current flow between the first electrode 210 and the cap assembly 300. Accordingly, the terminal part of the cap assembly may become a positive electrode.

The second current collecting plate 720 may be connected to the second electrode 220. For example, the second current collecting plate 720 may be electrically connected to the second uncoated portion 221. For example, the second current collecting plate 720 and the second uncoated portion 221 may be coupled by welding, for example. Also, the second current collecting plate 720 is connected to the bottom portion 120 of the case. For example, the second current collecting plate 720 and the bottom portion 120 of the case may be coupled by welding. Therefore, the second current collecting plate 720 may become a passage for current flow between the second electrode 220 and the case 100. Accordingly, the case may become a negative electrode.

The first current collecting plate 710 may include at least one hole. For example, the first current collecting plate 710 may include a first hole 710a. The first hole 710a may correspond to the hollow part 250. **In** one or more embodiments, the first hole 710a and the hollow part 250 overlap in the Y-axis direction.

The injection member 900 may be on the first current collecting plate 710. The injection member 900 may be between the first current collecting plate 710 and the cap assembly 300. In one or more embodiments, the injection member 900 may be between the first current collecting plate 710 and the cap down 330.

**In** some embodiments, the injection member 900 may have a shape that is the same as or similar to that of the first current collecting plate 710. **In** other embodiments, the injection member 900 may have a shape different from that of the first current collecting plate 710. Also, the area of the injection member 900 may be less than or equal to that of the first current collecting plate 710. For example, the area of the injection member 900 may be equal to that of the first current collecting plate 710. In another example, the area of the injection member 900 may be smaller than that of the first current collecting plate 710.

The injection member 900 may include at least one hole. For example, the injection member 900 may include a second hole 900a. The second hole 900a may correspond to the first hole 710a and the hollow part 250. Therefore, the first hole 710a, the second hole 900a, and the hollow part 250 may overlap in the Y-axis direction.

In embodiment(s), the electrolyte may be injected while sequentially passing through the second hole 900a, the first hole 710a, and the hollow part 250.

The injection member 900 may include a support part 910 and a protrusion part 920. The support part 910 may be on the first current collecting plate 710. The injection member 900 may be coupled with the first current collecting plate 710.

For example, the support part 910 and the first current collecting plate 710 may be coupled. In embodiment(s), the injection member 900 may include metal. For example, the injection member 900 may include a material that is the same as or similar to the first current collecting plate 710. For example, the injection member 900 may include aluminum. The support part 910 and the first current collecting plate 710 may be coupled by welding, for example.

In other embodiments, the injection member 900 may include a resin material. An adhesive layer may be between the support part 910 and the first current collecting plate 710. The support part 910 and the first current collecting plate 710 may be coupled by the adhesive layer, for example.

In some embodiments, the injection member 900 may be coupled and fixed to the first current collecting plate without separate welding or adhesive layers. For example, the support part 910 may be on the first current collecting plate 710, and the protrusion part 920 may be inserted into the first hole 710a. Accordingly, the injection member 900 and the first current collecting plate 710 may be inserted into and coupled to each other.

The protrusion part 920 may be inserted into the first hole 710a. The protrusion part 920 does not contact the first current collecting plate 710. The second hole 900a includes an inner surface LS formed by the protrusion part 920. The support part 910 and the protrusion part 920 may be connected. For example, the support part 910 and the protrusion part 920 may be integrated.

The protrusion part 920 may have a set size. The distance between the support part 910 and the electrode assembly 200 may be defined as a first distance D1. The first distance **D1** may be defined as a distance between the lower surface of the support part 910 and the hollow part 250. The first distance **D1** may be defined as the distance between the lower surface of the support part 910 and the upper surface of the innermost separator. The protrusion part 920 may include a first end and a second end. The first end may be connected to the support part 910. The first end and the second end are opposite.

The length L of the protrusion part 920 may be defined as the distance in the Y-axis direction between the first end and the second end of the protrusion part. The length L of the protrusion part 920 may be less than or equal to the first distance D1. Therefore, the protrusion part 920 does not overlap the separator 230 in the X-axis direction. **In** embodiment(s), the protrusion part 920 may overlap with the first uncoated portion 211 in the Y-axis direction, and the protrusion part 920 may not overlap with the first active material layer, the second electrode 220, and the separator 230 in the Y-axis direction.

The injection member 900 includes an inlet 901 and an outlet 902. The inlet 901 and the outlet 902 are formed by the second hole 900a and the protrusion part 920. The inlet 901 may be between the outlet 902 and the cap down 330. The outlet 902 may be between the inlet 901 and the electrode assembly 200.

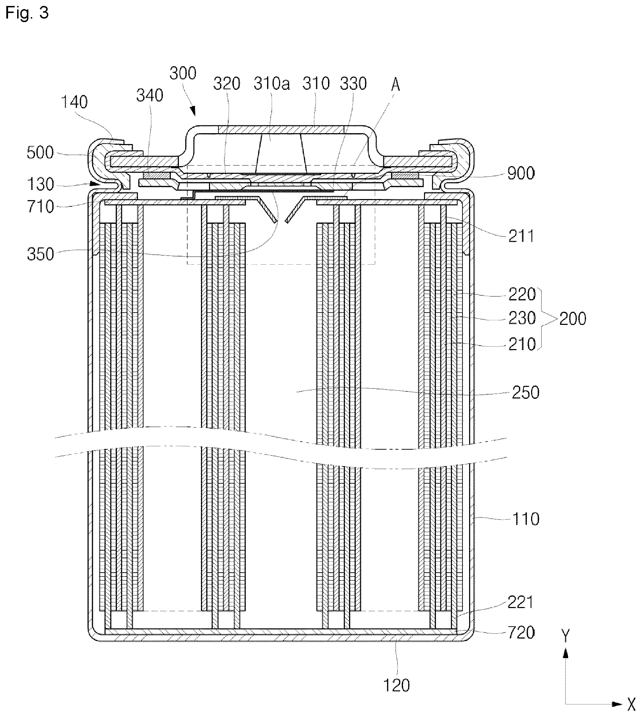

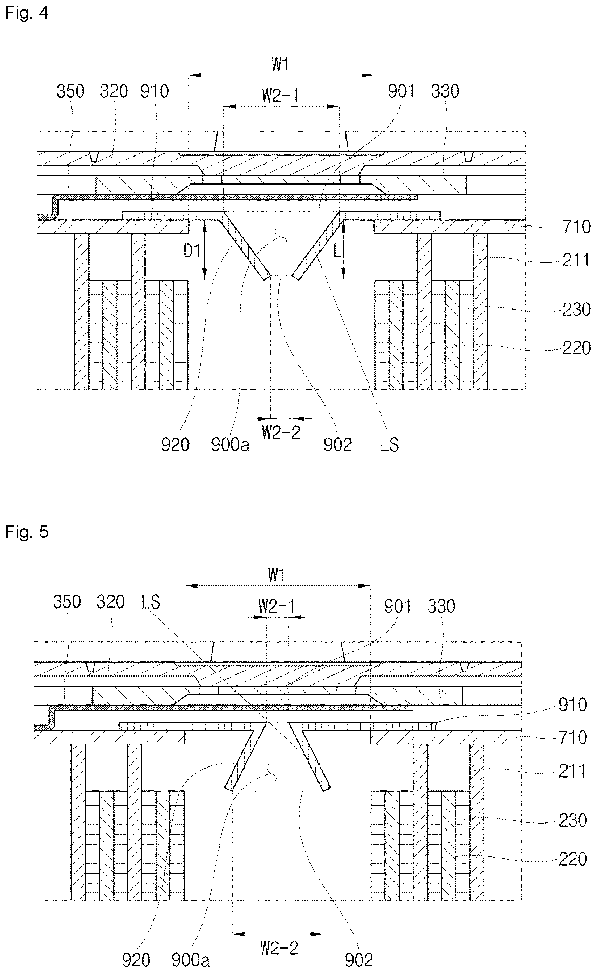

The size of the second hole 900a may change while extending in one direction. For example, referring to FIGS. 3 and 4, the width of the second hole 900a may decrease while extending in one direction. For example, the width of the second hole 900a may decrease while extending from the inlet 901 to the outlet 902.

The separator 230 may be at the innermost side of the electrode assembly 200. For example, the inner surface of the hollow part 250 may be a separator. Therefore, if the electrolyte is injected, the separator may be damaged. In one or more embodiments, the electrolyte may be injected by a vacuum process and a pressing process. A pressure within a set range may be generated during the pressing process. For example, a pressure of 3 bar to 8 bar may be generated during the pressing process. A region of the separator adjacent to the first hole directly receives the pressure. Therefore, the separator may be damaged by the pressure. Accordingly, the shape of the electrode assembly may change. In addition, the center of the electrode assembly may collapse. In addition, the efficiency of the electrode assembly may decrease.

The secondary batteries according to embodiments herein includes an injection member. Accordingly, the above-described problem can be solved.

For example, the pressure generated if the electrolyte is injected may be reduced by the injection member 900. Accordingly, the pressure directly transmitted to the region of the separator adjacent to the first hole may be reduced. Therefore, damage to the separator may be prevented.

To this end, the sizes of the inlet 901 and the outlet 902 may be controlled. The first hole 710a may have a first width W1. The inlet 901 may have a second-first width (W2-1). The outlet 902 may have a second-second width W2-2.

The first width W1 may have a set size. The first width W1 may be 4 mm to 6 mm, 4.5 mm to 6 mm, or 5 mm to 5.5 mm. The range of the first width W1 may be set for the welding process and the current collection efficiency of the first current collecting plate 710.

The second-first width W2-1 may have a set size. The second-first width W2-1 may be smaller than the first width W1. For example, the second-first width W2-1 may be 50% or less of the first width W1. For example, the second-first width W2-1 may be 25% to 45%, 30% to 45%, or 35% to 40% of the first width W1. For example, the second-first width W2-1 may be 2 mm to 4 mm, 2.5 mm to 3.5 mm, or 2.8 mm to 3.2 mm.

The inlet 901 is a portion where the electrolyte enters. If the size of the inlet 901 is large, the pressure generated during the pressing process may increase. In the embodiment, the size of the inlet is smaller than the size of the first hole. Accordingly, it is possible to reduce or prevent a region of the separator adjacent to the first hole from being damaged by the pressure.

The second-second width W2-2 may have a set size. The second-second width W2-2 may be smaller than the first width W1. In addition, the second-second width (W2-2) may be smaller than the second-first width W2-1. Accordingly, the width of the protrusion part 920 may decrease from the inlet 901 to the outlet 902. That is, the inner surface LS of the second hole 900a may be an inclined surface whose width decreases from the inlet 901 to the outlet 902.

For example, the second-second width W2-2 may be 50% or less of the second-first width W2-1. For example, the second-second width W2-2 may be 15% to 50%, 20% to 45%, or 25% to 40% of the second-first width W2-1. For example, the second-second width W2-2 may be 0.5 mm to 1.5 mm, 0.7 mm to 1.3 mm, or 0.9 mm to 1.1 mm.

The protrusion part 920 is a passage through which the electrolyte moves toward the hollow part 250. The width of the protrusion part 920 may change while extending in one direction. Thus, the pressure of the electrolyte passing through the protrusion part may be reduced by the resistance according to the change in the width of the protrusion part. Therefore, the pressure of the electrolyte passing through the outlet 902 and moving toward the hollow part may be reduced. Accordingly, it is possible to reduce or prevent a region of the separator adjacent to the first hole from being damaged by the pressure.

A secondary battery according to the current embodiment includes the injection member 900. The injection member may be on the first current collecting plate 710. The first current collecting plate includes the first hole 710a. The electrolyte is injected into the case 100 through the first hole. Accordingly, the electrolyte is injected into the electrode assembly.

The first hole may have a size set for a welding process. The electrolyte may be injected while passing through the first hole by the pressing process. The pressure of the electrolyte may be increased by the pressing process. Also, there is a problem that the welding process becomes difficult if the size of the first hole is reduced to reduce the pressure of the electrolyte.

Therefore, the injection member includes an inlet and an outlet, each having a set size. The inlet may be smaller than the size of the first hole. Accordingly, it is possible to reduce or prevent the pressure of the electrolyte from increasing due to the size of the inlet. Also, the inlet and the outlet may have different widths. That is, the width of the inner surface of the second hole of the injection member may change while extending in one direction. Accordingly, if the electrolyte passes through the second hole, the pressure of the electrolyte may be reduced by the resistance according to the change in width. Accordingly, the pressure of the electrolyte moving in the direction of the electrode assembly from the outlet may be reduced.

Therefore, it is possible to reduce or prevent a region of the separator adjacent to the first hole from being damaged by the pressure. Accordingly, the reliability and efficiency of the secondary battery may be improved.

Hereinafter, the secondary battery according to another embodiment will be described with reference to FIGS. 5 to 15. FIGS. 5 to 15 are various sectional views showing different shapes of the injection member in the A region of FIG. 3. Descriptions that are the same as or similar to those of the previously described embodiments will be omitted. In addition, the same drawing reference numerals are given to the same components.

Referring to FIG. 5, the injection member 900 may include the inlet 901 and the outlet 902. The width W2-1 of the inlet 901 may be smaller than the width W2-2 of the outlet 902.

The second-first width W2-1 may have a set size. The second-first width W2-1 may be smaller than the first width W1. For example, the second-first width W2-1 may be 50% or less of the first width W1. For example, the second-first width W2-1 may be 10% to 30%, 10% to 25%, or 15% to 20% of the first width W1. For example, the second-first width W2-1 may be 0.5 mm to 1.5 mm, 0.7 mm to 1.3 mm, or 0.9 mm to 1.1 mm.

The second-second width W2-2 may have a set size. In some embodiments, the second-second width W2-2 may be smaller than the first width W1. In other embodiments, the second-second width W2-2 may be larger than the second-first width W2-1. Accordingly, the width of the protrusion part 920 may increase from the inlet 901 to the outlet 902. That is, the inner surface LS of the second hole 900a may be an inclined surface whose width increases from the inlet 901 to the outlet 902.

For example, the second-first width W2-1 may be 50% or less of the second-second width W2-2. For example, the second-first width W2-1 may be 15% to 50%, 20% to 45%, or 25% to 40% of the second-second width W2-2. For example, the second-second width W2-2 may be 2 mm to 4 mm, 2.5 mm to 3.5 mm, or 2.8 mm to 3.2 mm.

Therefore, by controlling the size of the inlet 901, the pressure generated if the electrolyte enters may be reduced. Accordingly, it is possible to reduce or prevent a region of the separator adjacent to the first hole from being damaged by the pressure.

Also, the pressure of the electrolyte passing through the protrusion part may be reduced by the resistance according to the change in the width of the protrusion part. Accordingly, the pressure of the electrolyte passing through the outlet 902 and moving toward the hollow part may be reduced. Accordingly, it is possible to reduce or prevent a region of the separator adjacent to the first hole from being damaged by the pressure.

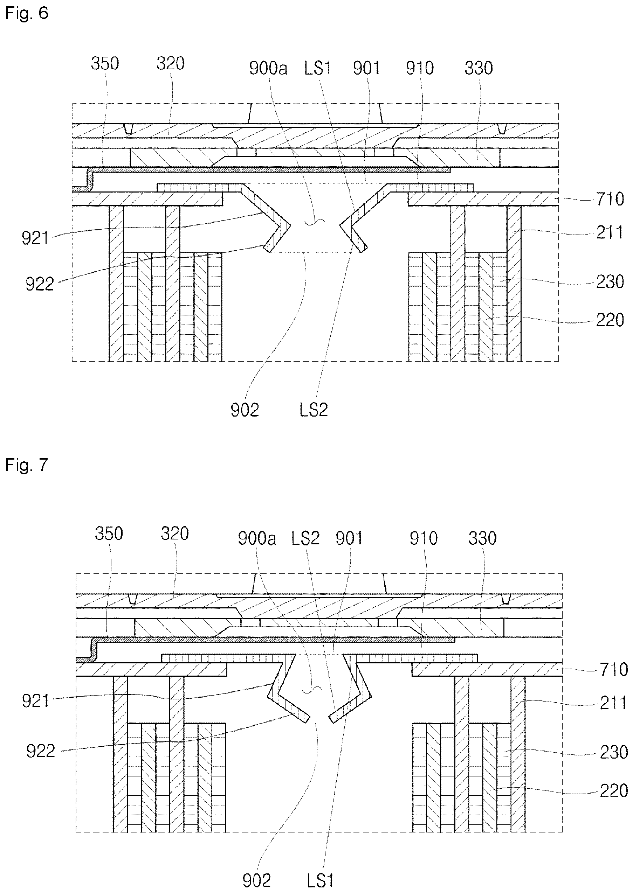

Referring to FIGS. 6 and 7, the protrusion part 920 may include a first protrusion part 921 and a second protrusion part 922. The first protrusion part 921 may be connected to the support part 910. The first protrusion part 921 may be between the second protrusion part 922 and the support part 910. The first protrusion part 921 and the second protrusion part 922 may be integrated.

The second hole 900a may include a first inner surface LS1 and a second inner surface LS2 formed by the first protrusion part 921 and the second protrusion part 922. The first inner surface LS1 may be formed by the first protrusion part 921. The second inner surface LS2 may be formed by the second protrusion part 922.

Referring to FIG. 6, the width of the first inner surface LS1 may decrease while extending from the inlet 901 toward the outlet 902. Accordingly, the pressure of the electrolyte may decrease. Also, the width of the second inner surface LS2 may increase while extending from the inlet 901 toward the outlet 902. Accordingly, the resistance of the second hole 900a may increase. That is, as the region where the width of the second hole changes increases, the resistance transferred to the electrolyte may increase.

Therefore, the pressure of the electrolyte may decrease while passing through the second hole 900a. Also, the size of the outlet 902 may increase. Therefore, an injection speed of the electrolyte may be increased. Accordingly, the efficiency of the manufacturing process of the secondary battery may be improved.

Referring to FIG. 7, the width of the first inner surface LS1 may increase while extending from the inlet 901 toward the outlet 902. Accordingly, the pressure of the electrolyte may decrease. Also, the width of the second inner surface LS2 may decrease while extending from the inlet 901 toward the outlet 902. Accordingly, the resistance of the second hole 900a may increase. That is, as the region where the width of the second hole changes increases, the resistance transferred to the electrolyte may increase.

Therefore, the pressure of the electrolyte may decrease while passing through the second hole 900a. Also, the size of the outlet 902 may decrease. Therefore, the injection member 900 may be easily inserted into the first hole 710a.

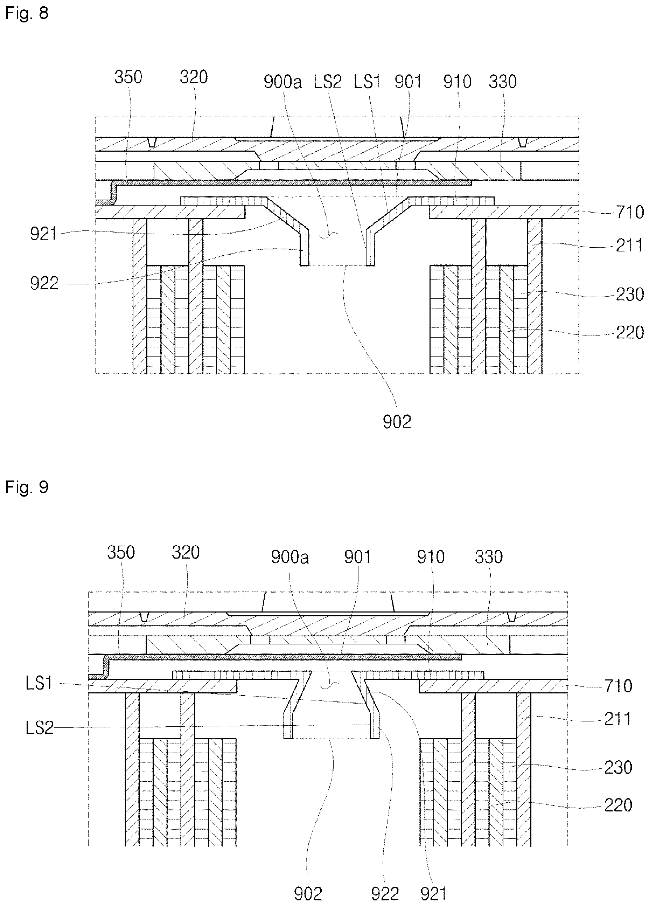

Referring to FIGS. 8 and 9, the protrusion part 920 may include the first protrusion part 921 and the second protrusion part 922. The first protrusion part 921 may be connected to the support part 910. The first protrusion part 921 may be between the second protrusion part 922 and the support part 910. The first protrusion part 921 and the second protrusion part 922 may be integrated.

The second hole 900a may include a first inner surface LS1 and a second inner surface LS2 formed by the first protrusion part 921 and the second protrusion part 922. The first inner surface LS1 may be formed by the first protrusion part 921. The second inner surface LS2 may be formed by the second protrusion part 922.

Referring to FIG. 8, the width of the first inner surface LS1 may decrease while extending from the inlet 901 toward the outlet 902. Also, referring to FIG. 9, the width of the first inner surface LS1 may increase while extending from the inlet 901 toward the outlet 902. Also, the width of the second inner surface LS2 does not change. That is, the width of the second inner surface LS2 may be the same or similar while extending from the inlet 901 toward the outlet 902. That is, the second inner surface LS2 may be a plane.

Accordingly, the resistance of the second hole 900a may increase. That is, as the region where the width of the second hole changes increases, the resistance transferred to the electrolyte may increase. Therefore, the pressure of the electrolyte may decrease while passing through the second hole 900a.

Also, the second protrusion part 920 does not have a slope. Therefore, if the electrolyte passes through the outlet, it may reduce or prevent the electrolyte from being directly transferred toward the separator. Accordingly, damage to the separator may be prevented or reduced.

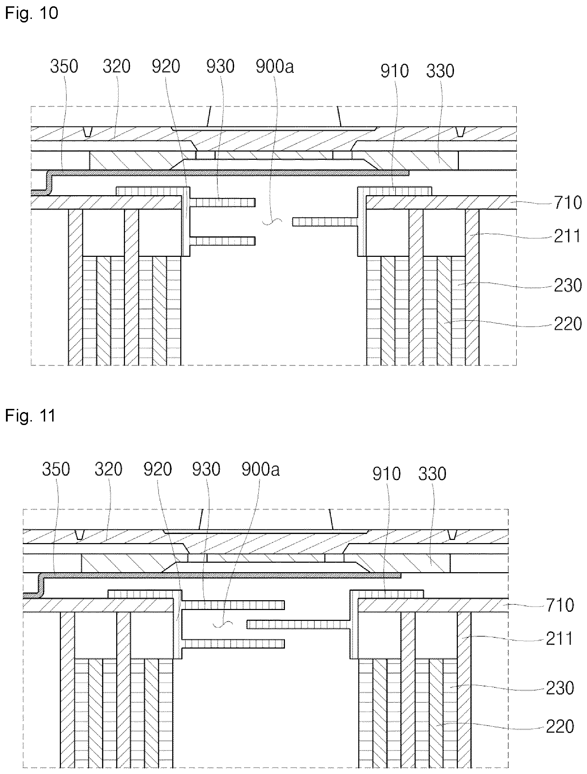

Referring to FIGS. 10 and 11, the injection member 900 may include the support part 910, a protrusion part 920, and a buffer part 930.

The support part 910 may be on the first current collecting plate 710.

The protrusion part 920 is connected to the support part 910. The protrusion part 920 does not have an inclination. Therefore, the width of the protrusion part 920 does not change. That is, the protrusion part 920 extends in the Y-axis direction. The protrusion part 920 may be in contact with the first current collecting plate 710. In embodiment(s), the protrusion part 920 may be in contact with the inner surface of the first hole 710a.

The buffer part 930 is connected to the protrusion part 920. The buffer part 930 may extend in a direction that is vertical or nearly vertical with the protrusion part 920. For example, the buffer part 930 and the protrusion part 920 may form an angle of 60° to 90°.

The buffer part (930) may include a plurality of buffer parts. The plurality of buffer parts may be spaced apart from each other. For example, the plurality of buffer parts may be spaced apart in the X-axis direction and the Y-axis direction.

The plurality of buffer parts may include a first end and a second end. The first end is connected to the protrusion part 920. The second end is an end opposite to the first end.

Referring to FIG. 10, each of the second ends of the plurality of buffer parts does not overlap a center of the second hole of the injection member in the Y-axis direction.

Referring to FIG. 11, the plurality of buffer parts may overlap in the Y-axis direction. That is, the second end of one buffer part may overlap with other buffer parts in the Y-axis direction.

The electrolyte may be injected through the second hole 900a. The pressure of the electrolyte may be reduced by the buffer part 930. In one or more embodiments, the electrolyte may contact the buffer part 930 while passing through the second hole 900a. As a result, the pressure of the electrolyte may be reduced. Therefore, if the electrolyte moves to the hollow part 250, it is possible to reduce or prevent a region of the separator adjacent to the first hole from being damaged by the pressure.

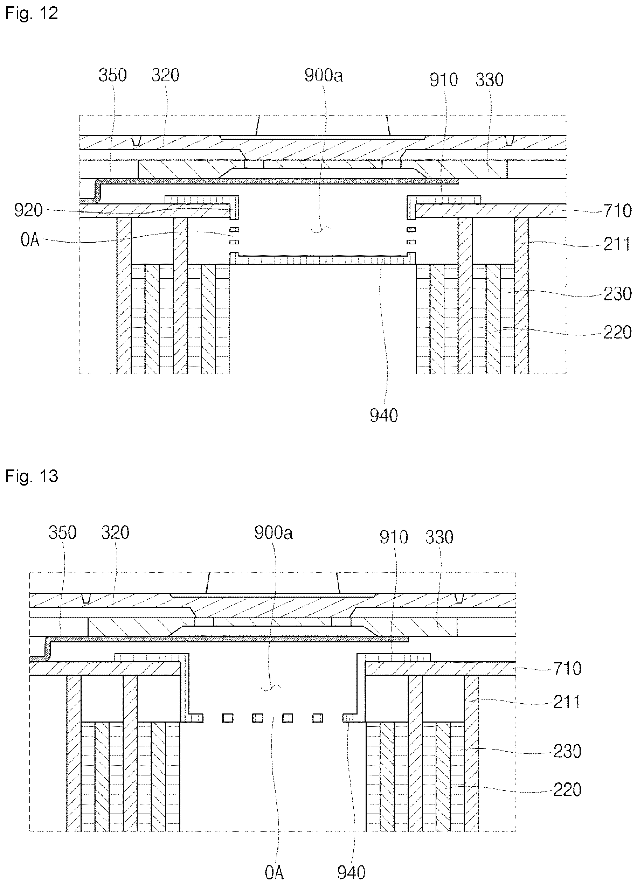

Referring to FIGS. 12 and 13, the injection member 900 may include the support part 910, the protrusion part 920, and a bottom part 940.

The support part 910 may be on the first current collecting plate 710.

The protrusion part 920 is connected to the support part 910. The protrusion part 920 does not have an inclination. Therefore, the width of the protrusion part 920 does not change. That is, the protrusion part 920 extends in the Y-axis direction. The protrusion part 920 may be in contact with the first current collecting plate 710. For example, the protrusion part 920 may be in contact with the inner surface of the first hole 710a.

The bottom part 940 is connected to the protrusion part 920. The bottom part 940 forms the lower surface of the injection member 900.

At least one of the protrusion part 920 and the bottom part 940 may include an opening part OA. The opening part OA may have a set size. For example, the width of the opening part OA may be 0.5 mm to 1.5 mm, 0.7 mm to 1.3 mm, or 0.9 mm to 1.1 mm.

For example, referring to FIG. 12, the protrusion part 920 may include a plurality of opening parts OA. In this case, the lower surface of the injection member 900 may be closed by the bottom part 940.

Therefore, the electrolyte may move into the case through the opening part OA formed in the protrusion part. The opening part OA has a set size. Accordingly, the pressure of the electrolyte may be reduced. Also, the electrolyte is not directly transferred toward the hollow part 250. Accordingly, it is possible to reduce or prevent a region of the separator adjacent to the first hole from being damaged by the pressure.

Alternatively, referring to FIG. 13, the bottom part 940 may include a plurality of opening parts OA. In this case, the side of the injection member (900) may be closed by the protrusion part 920.

Therefore, the electrolyte may move into the case through the opening part OA in the bottom part. The opening part OA has a set size. Accordingly, the pressure of the electrolyte may be reduced. Also, the opening part OA may be formed along the moving direction of the electrolyte. Accordingly, the speed of the injection process of the electrolyte may be improved. Accordingly, the manufacturing process efficiency of the secondary battery may be improved.

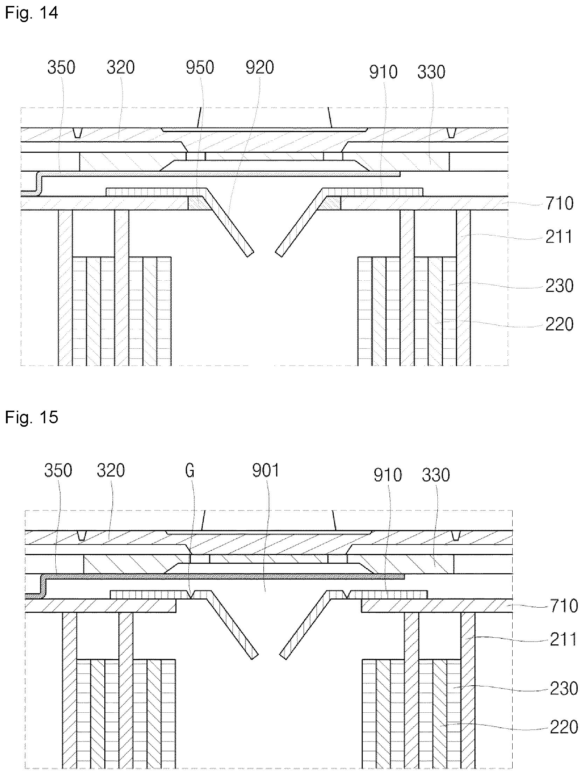

Referring to FIG. 14, the secondary battery may further include a fixing (or bonding) member 950. The fixing member 950 may be between the first current collecting plate 710 and the injection member 900. The fixing member 950 may have a ring shape. The fixing member 950 may be between the first current collecting plate 710 and the protrusion part 920. Accordingly, the fixing member 950 may surround the protrusion part 920.

A portion of the support part 910 and the protrusion part 920 are spaced apart from the first current collecting plate 710. Accordingly, the fixing force of the injection member 900 may decrease. Therefore, when injecting the electrolyte, the position of the injection member 900 may change. Accordingly, the efficiency of the electrolyte injection process may be reduced.

The fixing member 950 may contact the side of the first current collecting plate 710, the lower surface of the support part 910, and the side of the protrusion part 920. The fixing member 950 may contact the inner surface of the first hole, the lower surface of the support part 910, and the side of the protrusion part 920. Therefore, the fixing force of the injection member 900 may increase by the fixing member 950. Therefore, it is possible to prevent the position of the injection member 900 from being changed if the electrolyte is injected.

The fixing member 950 may include a non-metal. The fixing member 950 may include a resin. The fixing member 950 may include the same material as at least one of the insulating member 340 and the insulating gasket 500.

Referring to FIG. 15, the injection member 900 may include at least one groove G. For example, the groove G may be on at least one of an upper surface and a lower surface of the support part 910. The groove G may be a notch formed by removing a portion of the support part 910 to a set thickness.

If gas is generated due to overcharging or abnormal operation of the secondary battery, the injection member 900 may be cut along the groove G. Accordingly, the support part 910 and the protrusion part 920 may be separated. Thus, the size of the passage through which the gas moves may be increased. Further, the gas is easily discharged to the outside of the secondary battery and explosion of the secondary battery may be prevented.

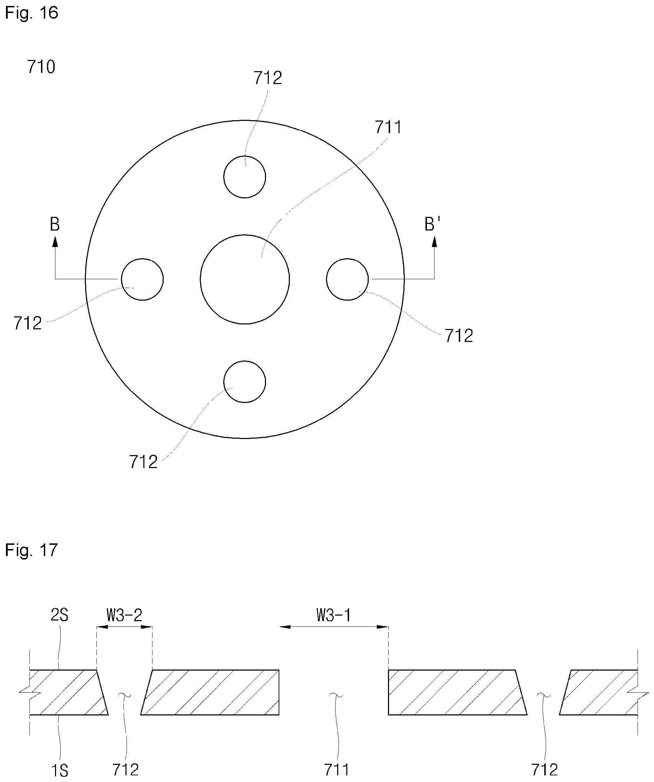

Hereinafter, the secondary battery according to another embodiment will be described with reference to FIGS. 16 to 25. Descriptions that are the same as or similar to those of the previously described embodiments will be omitted. In addition, the same drawing reference numerals are given to the same components.

Referring to FIGS. 16 and 17, the first current collecting plate 710 may include a plurality of holes. In one or more embodiments, the first current collecting plate 710 may include a first-first hole 711 and a first-second hole 712. The first-first hole 711 may correspond to the hollow part 250. The first-first hole 711 and the hollow part 250 may overlap in the Y-axis direction. The first-first hole 711 may correspond to the first hole 710a described above.

The first-second hole 712 may be spaced apart from the first-first hole 711. The first-second hole 712 may include at least one hole. For example, the first-second hole 712 may include one or more holes.

Since the first current collecting plate 710 includes the first-second hole 712, the efficiency of the electrolyte injection process may be improved. In some embodiments, the injection member 900 may be on the first-first hole 711. Accordingly, the injection speed of the electrolyte may be reduced. The first current collecting plate 710 further includes the first-second hole 712. Accordingly, the electrolyte may fill the interior of the case 100 through the first-second hole 712.

Therefore, it is possible to prevent the injection speed of the electrolyte from being reduced by the injection member 900.

The sizes of the first-first hole 711 and the first-second hole 712 may be different. For example, the width W3-1 of the first-first hole may be different from the width W3-2 of the first-second hole. The width W3-1 of the first-first hole and the width W3-2 of the first-second hole may be the maximum widths of the respective holes.

The width W3-1 of the first-first hole 711 may be larger than the width W3-2 of the first-second hole 712. The injection member 900 may be on the first-first hole 711. The injection member 900 includes the protrusion part 920. Since the width W3-1 of the first-first hole is large, the inclination angle of the protrusion part 920 may be easily controlled. That is, since the width W3-1 of the first-first hole is large, the inclination angle of the protrusion part 920 may be controlled to various sizes.

For example, the width W3-1 of the first-first hole 711 may be 3.5 mm to 4.5 mm, 3.7 mm to 4.3 mm, or 3.9 mm to 4.1 mm. The width W3-2 of the first-second hole 712 may be 2.5 mm to 3.5 mm, 2.7 mm to 3.3 mm, or 2.9 mm to 3.1 mm.

In some embodiments, the shapes of the first-first hole 711 and the first-second hole 712 may be the same. In other embodiments, the shapes of the first-first hole 711 and the first-second hole 712 may be different.

For example, the inner surface of the first-first hole 711 may not have an inclination. The inner surface of the first-second hole 712 may have an inclination. The first current collecting plate 710 may include a first surface 1S and a second surface 2S. The first surface 1S is a surface facing the electrode assembly 200. The second surface 2S is a surface opposite to the first surface 1S. The width of the inner surface of the first-second hole 712 may decrease while extending from the second surface 2S to the first surface 1S.

As described above, pressure may be generated if the electrolyte is injected. If the size of the hole increases, the pressure of the electrolyte may increase. The inner surface of the first-second hole has a slope. Accordingly, the injection passage of the electrolyte gradually decreases. Therefore, the pressure of the electrolyte generated if the electrolyte is injected may decrease. Accordingly, if the electrolyte is injected, it is possible to prevent the upper surface of the electrode assembly from being damaged.

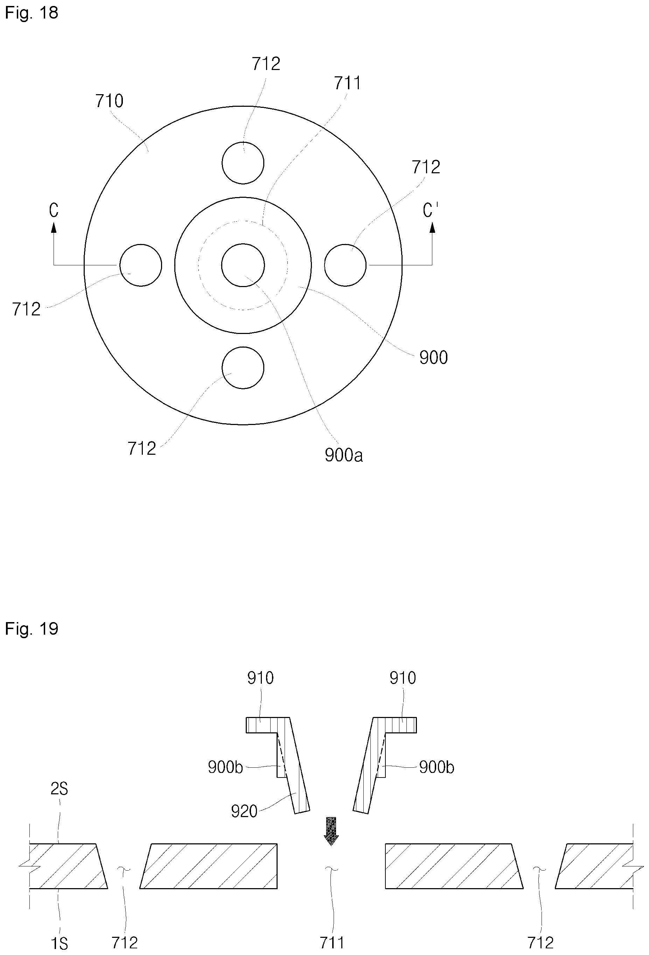

Referring to FIGS. 18 to 20, the injection member 900 may include a sealing member 900b.

The sealing member 900b may be connected to at least one of the support part 910 and the protrusion part 920. For example, the sealing member 900b may be connected to the support part 910 and the protrusion part 920. As another example, the support part 910, the protrusion part 920, and the sealing member 900b may be integrated.

If the injection member 900 is inserted into the first-first hole (711), the protrusion part 920 and the side of the first current collecting plate 710 may be spaced apart from each other. In some embodiments, the protrusion part 920 and the inner surface of the first-first hole 711 may be spaced apart. Accordingly, the fixing force of the injection member 900 may decrease. Accordingly, when injecting the electrolyte, the position of the injection member 900 may change due to pressure. Accordingly, the efficiency of the electrolyte injection process may decrease.

After the injection member 900 is inserted into the first-first hole 711, the sealing member 900b may be between the inner surface of the first-first hole (711) and the injection member 900. For example, the sealing member 900b may be between the inner surface of the first-first hole 711 and the protrusion part 920. The sealing member 900b may fully or partially cover the inner surface of the first-first hole 711. An area in which the sealing member 900b covers the inner side surface of the first-first hole 711 may vary according to the size of the sealing member 900b.

Accordingly, the injection member 900 and the first current collecting plate 710 may be sealed by the sealing member 900b. Accordingly, the fixing force of the injection member 900 may increase. In addition, when injecting the electrolyte, the position of the injection member 900 may be prevented from changing. Accordingly, the efficiency of the electrolyte injection process may be improved.

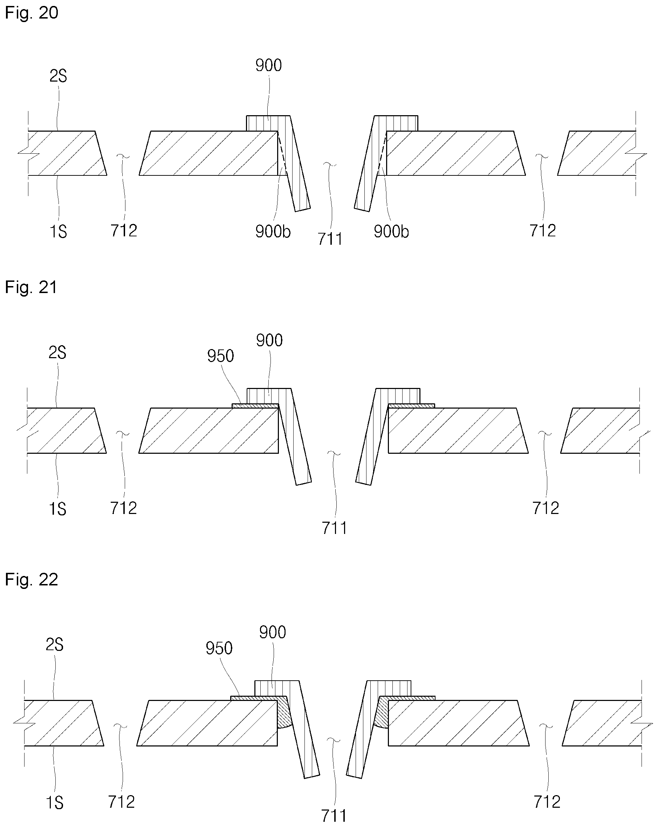

Referring to FIGS. 21 and 22, the injection member 900 may include a bonding member 950.

Referring to FIG. 21, the bonding member 950 may be between the injection member 900 and the second surface 2S of the first current collecting plate. The bonding member 950 may fully or partially cover a region between the injection member 900 and the second surface 2S.

The bonding member 950 may include an insulating material. Accordingly, if the injection member 900 includes metal, the injection member 900 and the first current collecting plate 710 may be insulated by the bonding member 950.

In other embodiments, the bonding member 950 may include a conductive material. Accordingly, if the injection member 900 includes metal, the injection member 900 and the first current collecting plate 710 may be electrically connected by the bonding member 950.

Although not shown in FIG. 21, the sealing member 900b (see FIG. 19) may be further between the injection member 900 and the inner surface of the first-first hole 711.

Referring to FIG. 22, the bonding member 950 may also be on the inner surface of the first-first hole 711. For example, the bonding member 950 may be on the second surface 2S and the inner surface of the first-first hole 711.

The bonding member 950 may include a resin material. Accordingly, the bonding member 950 may flow to the inner surface of the first-first hole 711 before curing. After the bonding member 950 is cured, the bonding member 950 may be on the second surface 2S and the inner surface of the first-first hole 711.

Accordingly, the bonding member 950 may be between the injection member 900 and the first current collecting plate 710. Thus, the fixing force of the injection member 900 may be improved. Also, the injection member 900 does not require a separate sealing member. Accordingly, the injection member 900 may be easily inserted into the first-first hole 711.

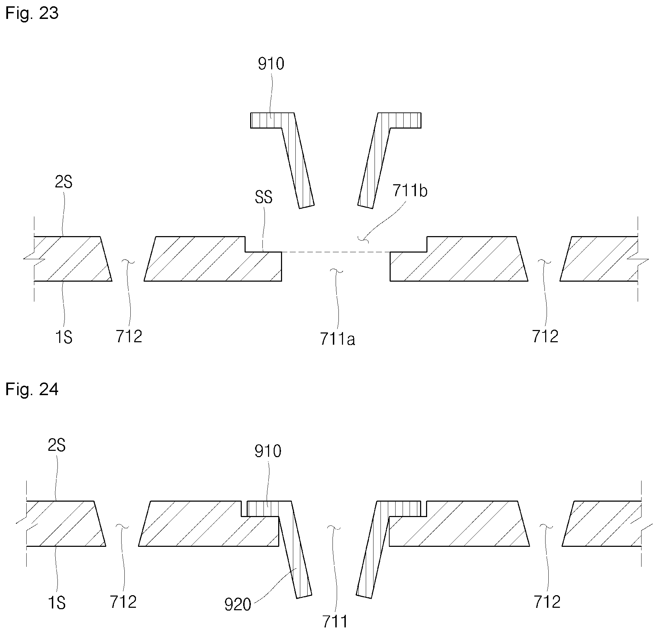

Referring to FIGS. 23 and 24, the first current collecting plate 710 may include the first-first hole 711. The first-first hole 711 may include a first groove 711a and a second groove 711b.

The first groove 711a may penetrate the first surface 1S. The second groove 711b may penetrate the second surface 2S. The first groove 711a and the second groove 711b may be connected. The first-first hole 711 may be formed by the first groove 711a and the second groove 711b.

The heights of the first groove 711a and the second groove 711b may be the same or different. For example, the height of the second groove 711b may vary depending on the thickness of the support part 910. The height of the second groove 711b may be greater than or equal to the thickness of the support part 910.

The sizes of the first groove 711a and the second groove 711b may be different. In one or more embodiments, the width of the first groove 711a may be smaller than the width of the second groove 711b. Accordingly, the second groove 711b may include a support surface SS.

The injection member 900 may be inserted into the first- first hole 711. The support part 910 may be inside the second groove 711b. The protrusion part 920 may be inside the first groove 711a.

The support part 910 may be on the support surface SS. The bonding member may be on the support part 910 and the support surface SS. The protrusion part 920 may be spaced apart from the first current collecting plate 710. The bonding member may be between the protrusion part 920 and the first current collecting plate 710. Alternatively, the protrusion part 920 may be connected to the sealing member. Accordingly, the sealing member may be between the protrusion part 920 and the first current collecting plate 710.

The height of the second groove 711b may be greater than or equal to the thickness of the support part 910. Accordingly, the upper surface of the injection member 900 may be on the same plane as the second surface 2S. Alternatively, the upper surface of the injection member 900 may be below the second surface 2S. Accordingly, the injection member 900 may not protrude outside the second surface 2S. Thus, the size of the electrode assembly may be increased by the thickness of the injection member 900. Accordingly, the efficiency of the secondary battery may be improved.

Also, it is possible to prevent the position of the injection member 900 from being changed. The injection member 900 may be fixed by the inner surface of the second groove 711b. Thus, when the electrolyte is injected, the position change of the injection member 900 is limited to the inner surface of the second groove 711b. Therefore, it is possible to reduce or prevent the position of the injection member 900 from being changed if the electrolyte is injected.

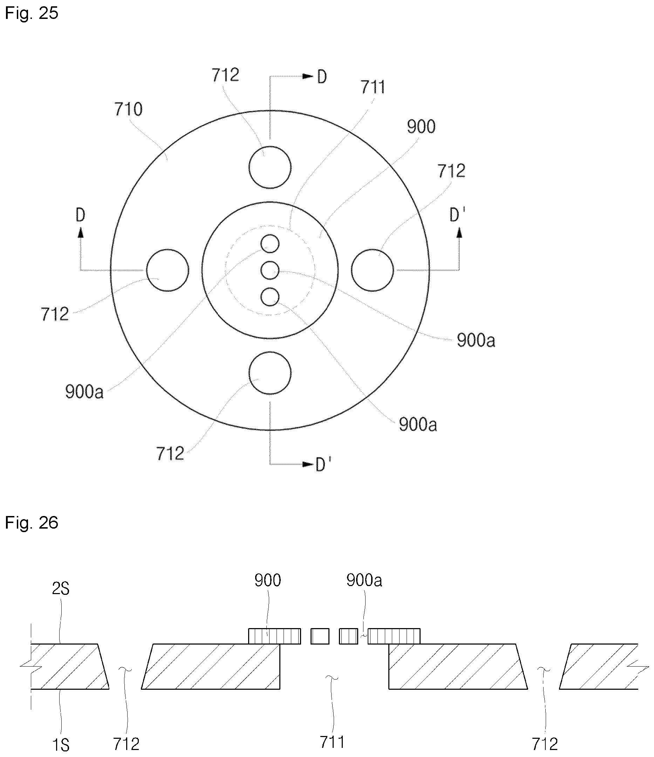

Hereinafter, the secondary battery according to another embodiment will be described with reference to FIGS. 25 to 28. Descriptions that are the same as or similar to those of the previously described embodiments will be omitted. In addition, the same drawing reference numerals are given to the same components.

Referring to FIGS. 25 and 26, the injection member 900 may not include a protrusion part. **In** some embodiments, the injection member 900 may include only a support part. The injection member 900 may include a plurality of second holes 900a. For example, the injection member 900 may include at least two second holes 900a. The number of the second holes 900a may be appropriately controlled according to the size of the injection member 900 or the injection speed of the electrolyte.

The second hole 900a may overlap the first- first hole 711 in the Y-axis direction. The second hole 900a may have a set size. For example, the width of the second hole 900a may be 0.1 mm to 2 mm, 0.3 mm to 1.7 mm, or 0.5 mm to 1.5 mm.

The size range of the second hole 900a may be set considering the pressure of the electrolyte. Since the size of the second hole 900a is within a set range, it is possible to prevent the separator exposed by the hollow part from being damaged by the electrolyte.

FIGS. 25 and 26 show that the first hole includes the first-first hole and the first-second hole, but the embodiment is not limited thereto. The first hole may include only the first-first hole.

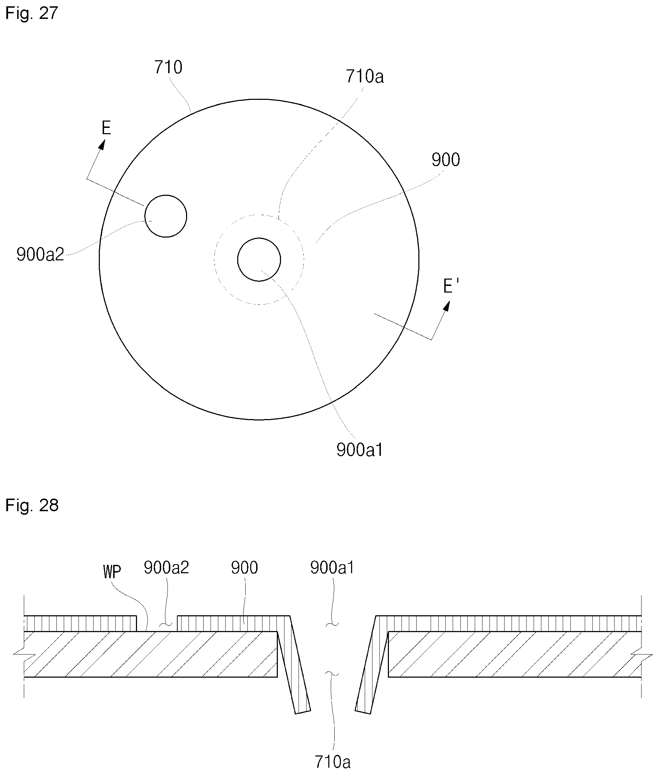

Referring to FIGS. 27 and 28, the sizes of the first current collecting plate 710 and the injection member 900 may be the same or similar. For example, the edge of the first current collecting plate 710 and the edge of the injection member 900 may be the same or similar.

The injection member 900 may include a plurality of holes. For example, the injection member 900 may include a second-first hole 900a1 and a second-second hole 900a2. The second-first hole 900a1 may correspond to the first hole 710a. The second-first hole 900a1 may overlap the first hole 710a in the Y-axis direction. The second-first hole 900a1 may correspond to the second hole 900a described above.

The second-second hole 900a2 may be at a set position. The first current collecting plate 710 is connected to the lead tab 350. The first current collecting plate 710 may include a welded part WP. The lead tab 350 may be welded to the welding part WP.

The second-second hole 900a2 may correspond to the welding part WP. The second-second hole 900a2 may overlap the welding part WP in the Y-axis direction. The welded area between the lead tab 350 and the first current collecting plate710 may be fixed by the injection member 900. That is, the lead tab 350 may be fixed by the inner surface of the second-second hole 900a2. Therefore, if an external impact is applied to the secondary battery, movement of the position of the lead tab may be reduced or prevented. Accordingly, it is possible to prevent a welding area of the lead tab and the first current collecting plate from being damaged.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Examples.

### Example 1

The electrode assembly is manufactured. Subsequently, the first current collecting plate is coupled to an upper portion of the electrode assembly, and the second current collecting plate is coupled to a lower portion of the electrode assembly.

Subsequently, the electrode assembly may be placed in the accommodation part of the case. Subsequently, the injection member may be on the first current collecting plate. Subsequently, the electrolyte may be injected through a hole in the injection member and the first current collecting plate.

The width (or diameter) of the hole in the first current collecting plate may be 6 mm. While the size of the hole in the injection member is different, it is checked whether the separator of the hollow part adjacent to the hole in the first current collecting plate is damaged.

**[Table 1]**

| | width of inlet (mm) | width of outlet (mm) | Damage to the separator |
|---|---|---|---|
| Example 1 | 3 | 0.5 | OK |
| Example 2 | 3 | 1 | OK |
| Example 3 | 3 | 1.5 | OK |
| Comparative example 1 | 3 | 2 | NG |
| Comparative example 2 | 3 | 2.5 | NG |
| Comparative example 3 | 3 | 3 | NG |

Referring to Table 1, it can be seen that if the width of the outlet is less than 50% of the width of the inlet, the separator is not damaged. On the other hand, it can be seen that if the width of the outlet exceeds 50% of the width of the inlet, the separator is damaged.

That is, it can be seen that damage to the separator can be prevented by controlling the difference between the width of the inlet and the width of the outlet.

### Example 2

The electrode assembly is manufactured. Subsequently, the first current collecting plate may be coupled to an upper portion of the electrode assembly, and the second current collecting plate may be coupled to a lower portion of the electrode assembly.

Subsequently, the electrode assembly may be placed in the accommodation part of the case. The injection member may be on the first current collecting plate. Subsequently, the electrolyte may be injected through a hole in the injection member and the first current collecting plate. In this case, the injection member may include a plurality of holes.

The width (or diameter) of the hole in the first current collecting plate may be 6 mm. While the size of the hole in the injection member is different, it is checked whether the separator in the hollow part adjacent to the hole in the first current collecting plate is damaged.

**[Table 2]**

| | width of inlet (mm) | width of outlet (mm) | Damage to the separator |
|---|---|---|---|
| Example 4 | 0.5 | 0.5 | OK |
| Example 5 | 1.0 | 1.0 | OK |
| Example 6 | 1.5 | 1.5 | OK |
| Comparative example 4 | 2.0 | 2.0 | NG |

Referring to Table 2, it can be seen that if the size of the hole in the injection member is less than 2.0 mm, the separator is not damaged. On the other hand, it can be seen that if the size of the hole in the injection member matches or exceeds 2.0 mm, the separator may be damaged.

That is, it can be seen that damage to the separator may be prevented by controlling the size of the hole in the injection member.

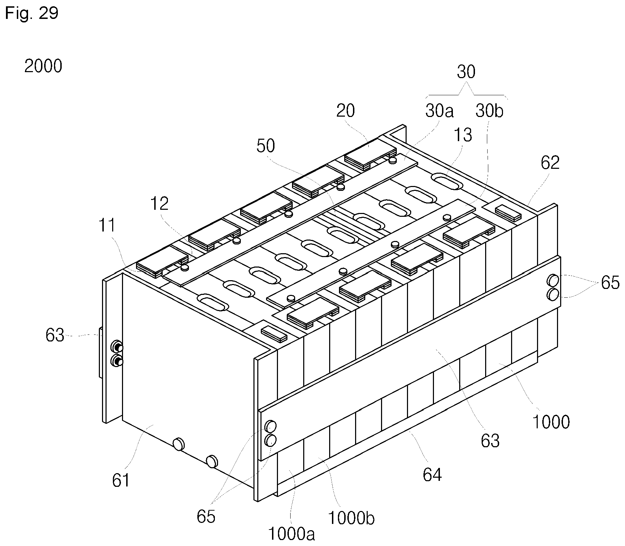

Hereinafter, a battery module including secondary batteries according to embodiments will be described with reference to FIG. 29.

Referring to FIG. 29, the battery module 2000 according to one or more example embodiments of the present disclosure includes electrode terminals 11 and 12, a plurality of secondary battery 1000 arranged in one direction, a connection tab 20 connecting a secondary battery 1000a to an adjacent secondary battery 1000b, and a protection circuit module 30 having one end connected to the connection tab 20. The protection circuit module 30 may include a battery management system (BMS). Further, the connection tab 20 may include a body portion in contact with the electrode terminals 11 and 12 between the adjacent secondary battery 1000a and 1000b and an extension portion extending from the body portion and connected to the protection circuit module 30. The connection tab 20 may be, for example, a bus bar.

Each secondary battery 1000 may include a battery case, an electrode assembly received (or accommodated) in the battery case, and an electrolyte. The electrode assembly and the electrolyte react electrochemically to store and release (e.g., generate) energy. Electrode terminals 11 and 12 electrically connected to the connection tab 20 and a vent 13 as a discharge passage for gas generated inside the battery case may be provided on one side of (e.g., an upper side of) the secondary battery 1000. The electrode terminals 11 and 12 of the secondary battery 1000 may be a positive electrode terminal 11 and a negative electrode terminal 12 having different polarities from each other, and the electrode terminals 11 and 12 of the adjacent secondary battery 1000a and 1000b may be electrically connected to each other in series or parallel by the connection tab 20, to be described in more detail below. Although a serial connection has been described as an example, the connection structure is not limited thereto, and various connection structures may be employed as desired or necessary. In addition, the number and arrangement of secondary battery is not limited to the structure shown in FIG. 29 and may be changed as desired or necessary.

The plurality of secondary batteries 1000 may be arranged in (e.g., may be stacked in) one direction so that the wide surfaces of the secondary batteries 1000 face each other, and the plurality of secondary batteries 1000 may be fixed by the housings 61, 62, 63, and 64. The housings 61, 62, 63, and 64 may include a pair of end plates 61 and 62 facing the wide surfaces of the secondary batteries 1000 and a side plate 63 and a bottom plate 64 connecting the pair of end plates 61 and 62 to each other. The side plate 63 may support side surfaces of the secondary batteries 1000, and the bottom plate 64 may support bottom surfaces of the secondary batteries 1000. **In** addition, the pair of end plates 61 and 62, the side plate 63 and the bottom plate 64 may be connected by bolts 65 and/or any other suitable fastening members and methods known to those of ordinary skill in the art.

The protection circuit module 30 may have electronic components and protection circuits mounted thereon and may be electrically connected to connection tabs 20, to be described in more detail later. The protection circuit module 30 includes a first protection circuit module 30a and a second protection circuit module 30b extending along the direction in which the plurality of secondary batteries 1000 are arranged in different locations. The first protection circuit module 30a and the second protection circuit module 30b may be spaced from each other at a suitable or desired interval (e.g., a predetermined interval) and arranged parallel to each other to be electrically connected to adjacent connection tabs 20, respectively. For example, the first protection circuit module 30a extends on one side of the upper portion of the plurality of secondary batteries 1000 along the direction in which the plurality of secondary batteries 1000 are arranged, and the second protection circuit module 30b extends to the other upper side of the plurality of secondary batteries 1000 along the direction in which the plurality of secondary batteries 1000 are arranged. The second protection circuit module 30b may be spaced from the first protection circuit module 30a at a suitable or desired interval (e.g., a predetermined interval) with the vents 34 interposed therebetween but may be disposed parallel to the first protection circuit module 30a. As such, the two protection circuit modules are spaced from each other side-by-side along the direction in which the plurality of secondary batteries 1000 are arranged, thereby reducing or minimizing the area of the printed circuit board (PCB) constituting the protection circuit module. By separately configuring the protection circuit module into two protection circuit modules, unnecessary PCM area can be reduced or minimized. In addition, the first protection circuit module 30a and the second protection circuit module 30b may be connected to each other by a conductive connection member 50. One side of the conductive connection member 50 is connected to the first protection circuit module 30a, and the other side thereof is connected to the second protection circuit module 30b so that the two protection circuit modules 30a and 30b can be electrically connected with each other.

The connection may be performed by any one of soldering, resistance welding, laser welding, projection welding and/or any other suitable connection methods known to those of ordinary skill in the art.

In addition, the conductive connection member 50 may be or include, for example, an electric wire. In addition, the conductive connection member 50 may be made of or include a material having elasticity or flexibility. By the conductive connection member 50, it may be possible to check and manage whether the voltage, temperature, and/or current of the plurality of secondary battery 1000 are normal or within a desired range. For example, the information received by the first protection circuit module from connection tabs adjacent to the first protection circuit module, such as voltage, current, and/or temperature, and the information received from connection tabs adjacent to the second protection circuit module, such as voltage, current, and/or temperature, may be integrated and managed by the protection circuit module through the conductive connection member 50.

In addition, when a secondary battery 1000 swells, shocks may be absorbed by the elasticity or flexibility of the conductive connection member 50, thereby hindering or preventing the first and second protection circuit modules 30a and 30b from being damaged.

In addition, the shape and structure of the conductive connection member 50 is not limited to the shape and structure shown in FIG. 29.

As described above, because the protection circuit module 30 is provided as the first and second protection circuit modules 30a and 30b, the area of the PCB constituting the protection circuit module can be reduced or minimized, and the space inside the battery module can be secured, which improves work efficiency by facilitating a fastening work for connecting the connection tab 20 and the protection circuit module 30 and repair work when an abnormality is detected in the battery module.

The secondary battery and battery modules according to the previously described example embodiments may be used to manufacture the battery pack.

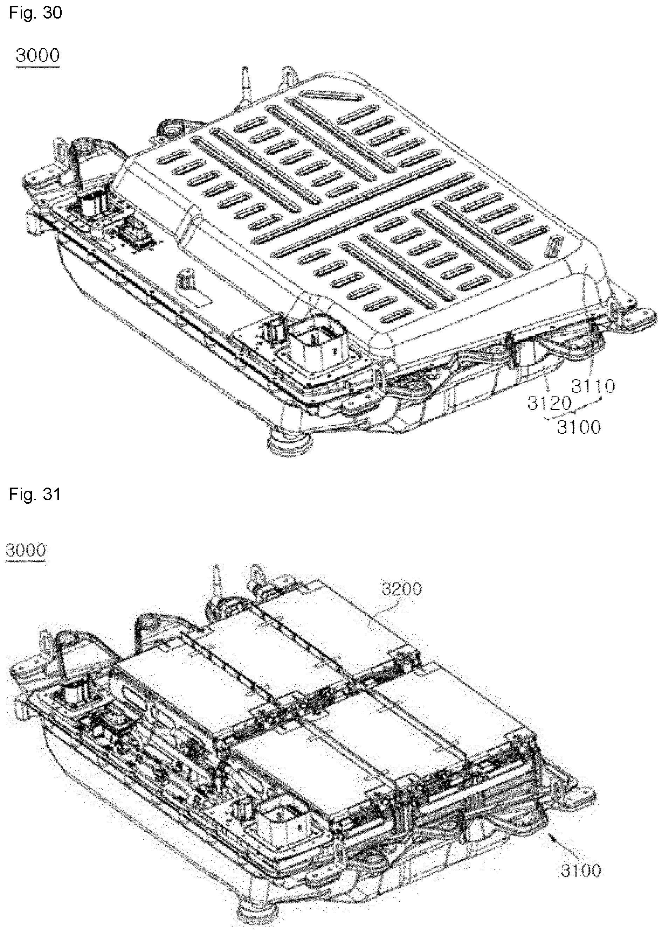

FIGS. 30 and 31 show a battery pack 3000 according to one or more example embodiments of the present disclosure. The battery pack 3000 may include a plurality of battery modules 3200 and a housing 3100 for accommodating the plurality of battery modules 3200. For example, the housing 3100 may include first and second housings 3110 and 3120 coupled in opposite directions through the plurality of battery modules 3200. The plurality of battery modules 3200 may be electrically connected to each other by using a bus bar, and the plurality of battery modules 3200 may be electrically connected to each other in a series/parallel or series-parallel mixed method, thereby obtaining desired (e.g., required) electrical output. In the drawing, for convenience of illustration, parts such as bus bars, cooling units, and external terminals for electrical connection of secondary battery are omitted. In one or more example embodiments, battery pack 3000 may be mounted in a vehicle. The vehicle may be or include, for example, an electric vehicle, a hybrid vehicle, or a plug-in hybrid vehicle. A vehicle may include a four-wheeled vehicle or a two-wheeled vehicle.

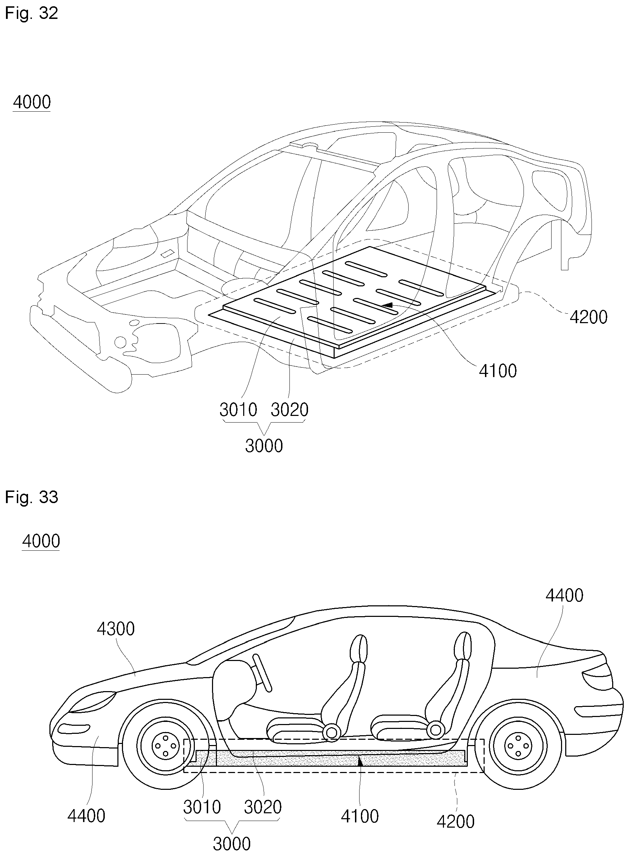

In FIG. 32, a battery pack 3000 may include a battery pack cover 3010, which is a part of a vehicle underbody 4100 and may correspond to the first housing, and a pack frame 3020, which is disposed under the vehicle underbody 4100 and may corresponding to the second housing. The battery pack cover 3010 and the pack frame 3020 may be, e.g., integrally formed with a vehicle floor 4200. The vehicle underbody 4100 separates the inside and outside of a vehicle, and the pack frame 3020 may be disposed outside the vehicle

In FIG. 33, a vehicle 4000 may be formed by combining additional parts, such as a hood 4300 in front of the vehicle 4000 and fenders 4400 respectively located in the front and rear of the vehicle 4000 to a vehicle body part. The vehicle 4000 may include the battery pack 3000 including the battery pack cover 3010 and the pack frame 3020, and the battery pack 3000 may be coupled to the vehicle body part.

The secondary battery according to one or more embodiments includes the injection member. The injection member may be on the first current collecting plate. The first current collecting plate may include a first hole. The electrolyte may be injected into the interior of the case through the first hole. Accordingly, the electrolyte may be injected into the interior of the electrode assembly.

The first hole may have a size set for the welding process. The electrolyte may be injected through the first hole through the pressuring process. The pressure of the electrolyte may be increased by the pressuring process. Also, if the size of the first hole is reduced in order to reduce the pressure of the electrolyte, there is a problem in that the welding process becomes difficult.

Accordingly, the injection member may include the inlet and the outlet having a set size. The inlet may be smaller than the size of the first hole. Accordingly, it is possible to reduce or prevent the pressure of the electrolyte from increasing due to the size of the inlet. Also, the inlet and the outlet may have different widths. That is, the width of the inner surface of the second hole of the injection member changes while extending in one direction. Accordingly, if the electrolyte passes through the second hole, the pressure of the electrolyte may be reduced by resistance according to the change in width. Thus, the pressure of the electrolyte moving from the outlet toward the electrode assembly may be reduced.

Therefore, it is possible to reduce or prevent a region of the separator adjacent to the first hole from being damaged by the pressure. Accordingly, the reliability and efficiency of the secondary battery may be improved.

The above discloses various embodiments for implementing a secondary battery according to the disclosure, and the disclosure is not limited to the above embodiments, and various modifications can be made by anyone having ordinary skill in the art to which the disclosure pertains without departing from the gist of the disclosure as claimed in the following claims. For example features of any one embodiment may be combined with features of any of the other embodiments.

Example embodiments have been disclosed herein, and although specific terms are employed, they are used and are to be interpreted in a generic and descriptive sense only and not for purpose of limitation. **In** some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
a case including an accommodation part and having a width direction and a height direction;
an electrode assembly accommodated in the accommodation part;
a first current collecting plate on the electrode assembly;
an injection member on the first current collecting plate; and
a cap assembly on the case,
wherein the electrode assembly comprises a first electrode, a second electrode, and a separator between the first electrode and the second electrode,
the electrode assembly comprises a hollow part,
the first current collecting plate comprises a first hole overlapping the hollow part,
the injection member comprises an inlet and an outlet,
the injection member comprises a second hole overlapping the first hole,
the injection member comprises a protrusion part inserted into the first hole,
the protrusion part is spaced apart from the first current collecting plate, and
a width of the protrusion part changes while extending from the inlet to the outlet.

2. The secondary battery as claimed in claim **1,** wherein the injection member further comprises a support part on the first current collecting plate,
the protrusion part comprises a first end connected to the support part and a second end opposite to the first end,
the support part and the electrode assembly are spaced apart by a first distance, and
a distance in the Y-axis direction between the first end and the second end is less than or equal to the first distance, and optionally wherein the first electrode comprises a first uncoated portion,
the second electrode comprises a second uncoated portion,
the protrusion part overlaps the first uncoated portion in the width direction, and
the protrusion part does not overlap the second electrodes and the separator in the width direction.

3. The secondary battery as claimed in claim 1 or claim 2, wherein a width of the inlet and a width of the outlet are smaller than a width of the first hole, and either
the width of the outlet is 15% to 50% of the width of the inlet; or.
the width of the inlet is 15% to 50% of the width of the outlet.

4. The secondary battery as claimed in claim 1 or claim 2, wherein the protrusion part comprises a first protrusion part and a second protrusion part,
a width of the first protrusion part decreases while extending from the inlet to the outlet, and
a width of the second protrusion part is increased while extending from the inlet to the outlet.

5. The secondary battery as claimed in claim 1 or claim 2, wherein the protrusion part comprises a first protrusion part and a second protrusion part,
a width of the first protrusion part changes while extending from the inlet to the outlet, and
a width of the second protrusion part does not change while extending from the inlet to the outlet.

6. The secondary battery as claimed in any one of the preceding claims, further comprising a fixing member between the first current collecting plate and the protrusion part.

7. The secondary battery as claimed in any one of the preceding claims, wherein the injection member comprises at least one groove.

8. A secondary battery, comprising:
a case including an accommodation part and having a width direction and a height direction defined;
an electrode assembly accommodated in the accommodation part;
a first current collecting plate on the electrode assembly;
an injection member on the first current collecting plate; and
a cap assembly on the case,
wherein the electrode assembly comprises a first electrode, a second electrode, and a separator between the first electrode and the second electrode,
the electrode assembly comprises a hollow part,
the first current collecting plate comprises a first hole overlapping the hollow part,
the injection member comprises a second hole overlapping the first hole,
the injection member comprises a support part on the first current collecting plate, a protrusion part inserted into the interior of the first hole, and a plurality of buffer parts extending in the width direction from the protrusion part, and
the protrusion part contacts the first current collecting plate.

9. The secondary battery as claimed in claim 8, wherein each of the plurality of buffer parts comprises a first end connected to the protrusion part and a second end opposite to the first end, and
each second end of the plurality of buffer parts do not overlap a center of the second hole of the injection member in the height direction.

10. The secondary battery as claimed in claim 8, wherein the plurality of buffer parts overlap in the height direction.

11. A secondary battery, comprising:
a case including an accommodation part and having a width direction and a height direction defined;
an electrode assembly accommodated in the accommodation part;
a first current collecting plate on the electrode assembly;
an injection member on the first current collecting plate; and
a cap assembly on the case,
wherein the electrode assembly comprises a first electrode, a second electrode, and a separator between the first electrode and the second electrode,
the electrode assembly comprises a hollow part,
the first current collecting plate comprises a first-first hole overlapping the hollow part, and a first-second hole that does not overlap the hollow part,
the injection member comprises an inlet and an outlet,
the injection member comprises a second hole overlapping the first-first hole,
the injection member comprises a support part on the first current collecting plate and a protrusion part inserted into the first-first hole,
the protrusion part is spaced apart from the first current collecting plate, and
a width of the protrusion part changes while extending from the inlet to the outlet.

12. The secondary battery as claimed in claim 11, wherein an inner surface of the first-second hole is inclined.

13. The secondary battery as claimed in claim **11** or claim 12, wherein the injection member further comprises a sealing member between an inner surface of the first-first hole and the protrusion part.

14. The secondary battery as claimed in any one of claims **11** to 13, further comprising a bonding member between the support part and the first current collecting plate, and optionally wherein the first current collecting plate comprises a first surface facing the electrode assembly and a second surface opposite the first surface, and
the bonding member is on the second surface and an inner surface of the first-first hole.

15. The secondary battery as claimed in any one of claims 11 to 14, wherein the first current collecting plate comprises a first surface facing the electrode assembly and a second surface opposite the first surface,
the first-first hole comprises a first groove penetrating the first surface and a second groove penetrating the second surface,
a width of the second groove is greater than a width of the first groove, and
the support part is on a support surface of the second groove.
